Europäisches Patentamt

European Patent Office

Office européen des brevets

(11) Numéro de publication : **0 391 879 B1**

# FASCICULE DE BREVET EUROPEEN

(45) Date de publication du fascicule du brevet :
**11.11.92 Bulletin 92/46**

(51) Int. Cl.⁵ : **B65G 47/248**

(21) Numéro de dépôt : **90870048.7**

(22) Date de dépôt : **02.04.90**

(54) **Dispositif d'alimentation automatique de pièces minces ou très minces.**

(30) Priorité : **05.04.89 BE 8900374**

(43) Date de publication de la demande :
**10.10.90 Bulletin 90/41**

(45) Mention de la délivrance du brevet :
**11.11.92 Bulletin 92/46**

(84) Etats contractants désignés :
**CH DE FR GB IT LI LU NL**

(56) Documents cités :
**US-A- 1 905 477**
**US-A- 3 123 199**
**US-A- 3 526 310**

(56) Documents cités :
**US-A- 4 362 234**
**PATENT ABSTRACTS OF JAPAN, vol. 10, no. 299 (M-524)[2355], 11 octobre 1986; & JP-A-61 111 230 (SAN ENG K.K.) 29-05-1986**

(73) Titulaire : **EUPEN AUTOMATION S.A.**
**1A Rovert**
**B-4731 Eynatten (BE)**

(72) Inventeur : **Brosius, Claude**
**45 Hagbrenden**
**B-4731 Eynatten (BE)**

(74) Mandataire : **Dellicour, Paul**
**Office de Brevets E. Dellicour rue Fabry 18/012**
**B-4000 Liège (BE)**

Jouve, 18, rue Saint-Denis, 75001 PARIS

**Description**

La présente invention concerne l'alimentation automatique par vibrateur et est relative à un dispositif qui permet dans le cas de pièces minces ou très minces une alimentation sans problème.

On connaît par le document US-A-3 123 199 un dispositif d'alimentation de pièces dans lequel un vibrateur est connecté à un rail d'alimentation et dans lequel des vibrations d'amplitude normalement uniformes sont transmises au rail amenant celui-ci à vibrer et à faire avancer les pièces le long du rail.

Les dispositifs d'alimentation actuels travaillent généralement par bol vibrant à rampe hélicoïdale permettant de stocker les pièces en vrac.

Dans ces dispositifs, les pièces montent le long de la rampe grâce à des vibrations composées fournies par un système d'électroaimants travaillant sur des paquets de ressorts supportant le bol. A la sortie de cette rampe les pièces passent par un dispositif d'orientation, souvent appelé chicane, qui laissera passer les pièces correctement orientées, alors que les autres retomberont dans le vrac.

Le débit dépend du nombre de pièces correctement positionnées, qui se présente en sortie et qui est par conséquent très variable. Or, la machine qui se trouve en aval travaille à un rythme régulier et il est donc nécessaire de créer un stock-tampon de pièces bien orientées entre le bol vibrant et la machine.

Ce stock est généralement réalisé sur un rail linéaire vibrant ou éventuellement un petit transporteur. Cependant, dans le cas de pièces minces ce système fonctionne généralement très mal car il est nécessaire de guider les pièces dans une glissière.

Si le jeu créé est très petit, la moindre déformation, bavure ou particule étrangère provoque des coincements et les pièces n'avancent plus. De même, si le jeu crée est trop grand, les pièces ont tendance à monter l'une sur l'autre et coincent également. Chaque coincement nécessite l'intervention d'un opérateur et la rentabilité de l'installation automatique chute alors de manière catastrophique.

Pour remédier à ces inconvénients dans le cas de pièces très minces ou même simplement minces il a paru avantageux suivant l'invention de créer un dispositif d'alimentation avec rail linéaire vibrant caractérisé en ce que le rail est décomposé en quatre zones, une zone avec pente d'accélération, une zone avec détecteur de passage suivi d'un basculeur de pièces à gauche et à droite, une zone ou stock-tampon et une zone terminale avec reposition de la pièce à plat, en ce que dans la deuxième zone le rail en cet endroit comporte trois plans, un plan horizontal situé sous le centre de gravité de la pièce et, de part et d'autre de ce plan, un plan incliné vers le bas, et en ce que le basculeur de la deuxième zone est commandé, de telle manière que deux pièces successives ne seront jamais dans le même plan.

Pour mieux faire comprendre l'invention celle-ci est décrite maintenant plus en détail sur la base du dessin annexé, à titre d'exemple uniquement, montrant en :

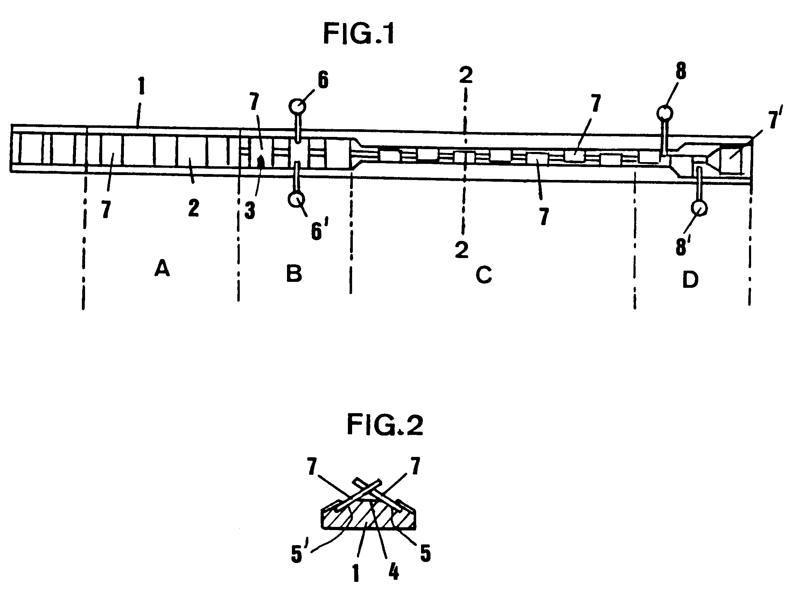

Figure 1 une vue schématique en plan du rail linéaire vibrant suivant l'invention, et

Figure 2 une coupe par 2 - 2 de figure 1.

Comme on le voit au dessin le rail est décomposé en quatre zones, la zone A ou pente d'accélération, la zone B ou détecteur de passage et basculeur, la zone C ou stock-tampon et la zone D ou zone terminale avec reposition de la pièce à plat.

Dans la zone A le rail 1 se présente avec une pente d'accélération 2 destinée à séparer les pièces, qui pourraient se suivre de trop près.

La Zone B comporte un capteur de détection de passage 3 et à cet endroit le rail 1 comporte trois plans, un plan horizontal 4 situé sous le centre de gravité de la pièce et de part et d'autre un plan incliné vers le bas 5, 5'.

Directement après le détecteur de passage 3 sont fixés deux petits cylindres ou électroaimants 6, 6', chacun d'eux travaillant au-dessus d'un des deux plans inclinés, respectivement 5, 5'.

Lorsque la première pièce 7 passe, le cylindre de gauche 6, par exemple, travaille et fait basculer la pièce en déplaçant son centre de gravité, pour que celle-ci quitte le plan horizontal 4 au centre du rail et tombe sur le plan incliné 5. Au passage de la pièce suivante c'est le cylindre de droite 6' qui travaille, et ainsi de suite.

On obtient par ce système que deux pièces successives ne seront jamais dans le même plan et n'auront donc pas tendance à monter l'une sur l'autre.

La zone C constitue le stock-tampon. Il est prévu de pouvoir placer un couvercle étroit partiellement sur chacun des plans inclinés 5, 5', de façon à bien assurer la position qui a été imposée par l'action des cylindres. Le stock-tampon est réalisé à la longueur optimale en relation avec la grandeur des pièces et la cadence de travail de la machine en aval.

Dans la zone D ou zone terminale la pièce est ramenée à plat et recentrée, le rail se présentant à nouveau à cet endroit sous la forme d'un seul plan horizontal. En fonction de la forme des pièces il peut être nécessaire de prévoir un dispositif d'isolement, tel que des séparateurs arrière 8 et avant 8', de la pièce en sortie de celles qui suivent. On voit en 7' la pièce isolée et centrée et en position de prise.

**Revendications**

1.  Dispositif d'alimentation automatique de pièces minces ou très minces comportant un rail linéaire vibrant, caractérisé en ce que le rail (1) est décomposé en quatre zones, une zone (A) avec pente d'accélérateur (2), une zone (B) avec détecteur de passage (3) suivi d'un basculeur de pièces à gauche et à droite, une zone (C) ou stock-tampon et une zone (D) ou zone terminale avec reposition de la pièce à plat, en ce que dans la deuxième zone (B) le rail en cet endroit comporte trois plans, un plan horizontal (4) situé sous le centre de gravité de la pièce et, de part et d'autre de ce plan (4), un plan incliné vers le bas (5, 5′), et en ce que le basculeur de la deuxième zone (B) est commandé, de telle manière que deux pièces successives (7) ne seront jamais dans le même plan.

2. Dispositif d'alimentation suivant la revendication 1, caractérisé en ce que le basculeur de la deuxième zone (B) est constitué par deux petits cylindres ou électroaimants (6, 6′), chacun d'eux travaillant au-dessus d'un des deux plans inclinés (5, 5′).

3. Dispositif d'alimentation suivant la revendication 1, caractérisé en ce que chaque plan incliné (5, 5 ) est recouvert partiellement d'un couvercle.

4. Dispositif d'alimentation suivant la revendication 1, caractérisé en ce que à la sortie de la portion de rail à trois plans et à l'entrée de la zone terminale est prévu un dispositif d'isolement ou séparateurs (8, 8′) pour isoler une pièce (7) de celle (7) qui la suit.

**Patentansprüche**

1. Automatische Zuführvorrichtung für dünne oder sehr kleine Teile enthaltend eine schwingende Linearschiene dadurch gekennzeichnet, dass die Schiene (1) sich in vier Zonen verteilt, eine Zone (A) mit einer Beschleunigungsneigung (2), eine Zone (B) mit einem Durchlaufdetektor (3) und einer links und rechts nachgeschalteten Teilenkippvorrichtung, eine Zone (C) oder Lager-Puffer und eine Zone (D) oder Endzone mit Flachwiederstellungsvorgang der Teile, dass die Schiene in der zweiten Zone (B) dort drei Flächen aufweist, eine unter dem Schwerpunkt des Teiles waagerechte Fläche (4) und beiderseits hin- und herüber dieser Fläche (4) eine Niedergefällefläche (5,5′) und dass die Kippvorrichtung dieser zweiten Zone (B) so gesteuert wird, dass zwei aufeinanderfolgende Teile (7) sich niemals in derselben Ebene befinden.

2. Zuführvorrichtung nach Anspruch 1 dadurch gekennzeichnet, dass die Kippvorrichtung der zweiten Zone (B) aus zwei kleinen Zylindern oder Elektromagneten (6,6′) besteht, je wirkend über einer der beiden Gefälleflächen (5,5′).

3. Zuführvorrichtung nach Anspruch 1 dadurch gekennzeichnet, dass jede Gefällefläche (5,5′) teilweise mit einem Deckel bedeckt wird.

4. Zuführvorrichtung nach Anspruch 1 dadurch gekennzeichnet, dass am Ausgang der dreiflächigen Schienenstrecke und am Eingang der Endzone eine Trennvorrichtung oder Abscheider (8,8′) zwecks der Abtrennung eines Teiles (7) gegenüber dem nachfolgenden (7′) anderen vorgesehen worden ist.

**Claims**

1. Automatic feeding device for thin or very small pieces containing a linear vibrating rail characterised in that the rail (1) is divided among four zones, a zone (A) with accelerating incline (2), a zone (B) with traveling detector (3) followed by a tipping device for pieces located at the left and right sides, a zone (C) or store-buffer and a zone (D) or end zone with flat repositioning process for the pieces, in that in the second zone (B) the rail presents there three planes, a horizontal plane (4) located under the centre of gravity of the piece and on both sides of this plane (4) a down-inclined plane (5, 5′) and in that the tipping device of the second zone (B) is controlled in such a way that two successive pieces (7) will never be located on the same level.

2. Feeding device as claimed in claim 1 characterised in that the tipping device of the second zone (B) is composed of two small cylinders or electromagnets (6,6′), each of them working above one of the two inclines (5,5′).

3. Feeding device as claimed in claim 1 characterised in that each incline (5,5′) is partly covered with a cover.

4. Feeding device as claimed in claim 1 characterised in that at the outlet of the rail section with three planes and at the inlet of the end zone an isolating device or separators (8,8′) has been foreseen with as function to separate one piece (7) from the following one (7′).

FIG.1

FIG.2